# EUROPÄISCHE PATENTSCHRIFT

(11) **EP 0 657 627 B1**
(45) Veröffentlichungstag und Bekanntmachung des Hinweises auf die Patenterteilung: **19.08.1998**
(21) Anmeldenummer: 94119098.5
(22) Anmeldetag: 03.12.1994
(51) Int. Cl.: F01K 23/10

(54) **Verfahren und Anordnung zum Anfahren eines Abhitzekessels mit wenigstens zwei getrennten Drucksystemen**
Method and arrangement for starting a HRSG comprising at least two separated pressure systems
Procédé et arrangement pour le mise en marche d'une chaudière de récupération avec au moins deux systèmes de pression séparés

(30) Priorität: 09.12.1993 DE 4342002
(43) Veröffentlichungstag der Anmeldung: 14.06.1995
(73) Patentinhaber: ABB PATENT GmbH, 68309 Mannheim (DE)
(72) Erfinder: Rachid, Nabil, D-68526 Ladenburg (DE)
(74) Vertreter: Rupprecht, Klaus, Dipl.-Ing.

(56) Entgegenhaltungen:
- US-A- 4 501 233
- PATENT ABSTRACTS OF JAPAN vol. 12, no. 157 (M-696) 13. Mai 1988 & JP-A-62 276 205 (TOSHIBA CORP.) 1. Dezember 1987

## Beschreibung

Die Erfindung betrifft ein Verfahren zum Anfahren eines Abhitzekessels in einem Gasturbinen-Kombikraftwerk mit zwei Drucksystemen unterschiedlichen Druckniveaus, wobei der erzeugte Dampf erst nach Erreichen vorgegebener Druck- und Temperaturparameter zum Betrieb einer Dampfturbine verwendet wird und der im Drucksystem mit höheren Druck erzeugte Dampf bis zum Erreichen der vorgegebenen Druck- und Temperaturparameter dem wenigstens einen Drucksystem mit geringerem Druck zu dessen Beheizung zugeführt wird, sowie eine Anordnung zur Durchführung dieses Verfahrens.

Die Verwertung der Abwärme des Abgases einer Gasturbine erfolgt üblicherweise dadurch, daß der Abgasstrom einem Wärmetauscher zugeführt wird, in welchem ein aufzuheizendes Medium strömt. Üblicherweise erfolgt dies in sogenannten Kombikraftwerken, welche neben der bereits erwähnten Gasturbine auch eine Dampfturbine aufweisen. Hierbei wird das Abgas der Gasturbine einem sogenannten Abhitzekessel zugeführt, welcher zur Dampferzeugung und gegebenenfalls auch zur Überhitzung des Dampfes für den Betrieb der Dampfturbine dient. Bei einem Abhitzekessel mit zwei oder mehreren Drucksystemen wird hierbei der Dampf für jedes System getrennt erzeugt.

Üblicherweise wird hierbei der beim Anfahren des Kessels erzeugte Dampf getrennt über separate Umleitstationen im Turbinenkondensator niedergeschlagen. Dies erfolgt solange bis die Kesselleistung soweit gesteigert ist, daß der erzeugte Dampfzustand für jedes System die Mindestanforderungen der Dampfturbine erfüllt. Erst wenn diese vorgegebenen Druck- und Temperaturparameter erreicht sind, erfolgt die Beaufschlagung der Dampfturbine mit dem nunmehr als Arbeitsmedium zur Verfügung stehenden Dampf.

Diese in ausgeführten Anlagen praktizierte Arbeitsweise führt dazu, daß während der Zeitspanne, in welcher der Abhitzekessel angefahren wird, um den erforderlichen Dampfzustand zu erreichen, einerseits beträchtliche Energiemenge quasi ungenutzt bleiben, nämlich wenn der Dampf im Turbinenkondensator kondensiert wird, und gleichzeitig die Umgebung belastet wird, indem die bei der Kondensation im Kondensator an das dort zur Kondensation benutzte Kühlwasser abgegebene Wärme ggf. zu dessen Verdampfung führt und so die Umgebung des Kraftwerkes mit Dampf sowie mit Warmluft beaufschlagt.

Ein Verfahren der eingangs genannten Art geht aus dem in der JP-A-62 276 205 gezeigten Anlagenkonzept mit einem System höheren Drucks und einem System geringeren Drucks hervor, gemäß welchem der im System höheren Drucks erzeugte Dampf zur Beaufschlagung des Systems geringeren Drucks herangezogen werden kann, wobei allerdings dieser Dampf vorzugsweise der dem System niedrigeren Drucks zugeordneten Turbinenstufe zugeführt wird.

Ausgehend von diesem Stand der Technik ist es Aufgabe der Erfindung, eine Verfahrensweise anzugeben, bei welcher die aufgewendete Energie verwendet wird, um den Zeitbedarf für den Anfahrvorgang möglichst zu verringern. Ferner soll eine Anordnung angegeben werden, die zur Durchführung der verbesserten Verfahrensweise geeignet ist.

Diese Aufgabe wird erfindungsgemäß durch die folgenden Verfahrensschritte gelöst, nämlich daß während der Aufheizphase beim Anfahrbetrieb die Systeme mit höherem und niedrigererem Druck über eine Umleitstation derart miteinander verbunden werden, daß der Dampf aus dem Überhitzer des Drucksystems höheren Drucks zunächst in den Überhitzerzweig des Drucksystems niedrigeren Drucks strömt und bei fortgeschrittener Erwärmung des Drucksystems niedrigeren Drucks zu einer Niederdruckturbine strömt; und daß beim Erreichen eines vorgegebenen Druckniveaus im Drucksystem niedrigeren Drucks die Umleitstation geschlossen wird.

Mit anderen Worten, der Wärmeinhalt des ansonsten an den Kondensator abgeleiteten Hochdruckdampfes, der aber sein Betriebsniveau zum Antrieb der Gasturbine noch nicht erreicht hat, wird zur Aufheizung des Dampfvolumens im Niederdruckbereich, d. h. im System mit geringerem Druck, verwertet, wodurch einerseits der Anfahrvorgang insgesamt beschleunigt werden kann und andererseits die geschilderte Umweltbelastung wesentlich verringert wird.

Gemäß einer Weiterbildung dieses Verfahrens ist vorgesehen, daß die Wärme des Dampfes aus dem Drucksystem mit dem höheren Druck über Wärmetauscher auf das Drucksystem mit geringerem Druck übertragen wird. Diese Verfahrensweise bietet sich an, wenn jeweils ein geschlossener Kreislauf für die vorgesehenen Drucksysteme vorgesehen ist.

Gemäß einer anderen Ausführungsform des erfindungsgemäßen Verfahrens kann die Ausnutzung der Wärme des Dampfes aus dem Drucksystem mit höherem Druck auch dadurch erfolgen, daß dieser in das Drucksystem mit geringerem Druck eingeleitet wird und so durch unmittelbare Wärmeübertragung das darin enthaltene Wasser verdampft.

Eine aus der JP-A-62 276 205 bekannte Anordnung zur Durchführung des erfindungsgemäßen Verfahrens besitzt einen Abhitzekessel und wenigstens zwei Drucksysteme unterschiedlichen Drucks, denen jeweils wenigstens je ein in dem Abhitzekessel befindlicher Verdampfer und im Drucksystem höheren Drucks ein Überhitzer zugeordnet sind, wobei jedes der beiden Drucksysteme eine separate Speisewasserleitung und eine separate Austrittsleitung aus dem Abhitzekessel zu einer Dampfturbine aufweist.

Um mit dieser Anordnung das erfindungsgemäße Verfahren durchführen zu können, ist erfindungsgemäß eine Umleitstation zur Verbindung der beiden Austrittsleitungen vorgesehen, mittels der die beiden Drucksysteme derart verbindbar sind, daß der Dampf während der Aufheizphase beim Anfahrbetrieb des Abhitzekessels aus dem Überhitzer des Drucksystems höheren Drucks zunächst in den Überhitzerzweig des Drucksystems niedrigeren Drucks strömt und bei fortgeschrittener Erwärmung des Drucksystems niedrigeren Drucks zu einer Niederdruckturbine strömt.

Dabei ist in vorteilhafter Weiterbildung der Erfindung vorgesehen, daß die Umleitstation abschaltbar ausgeführt ist, um eine Unterbrechung der Dampfströmung zwischen den Systemen unterschiedlichen Druckes unterbrechen zu können.

Gemäß einer bevorzugten Ausführungsform der Erfindung ist die Umleitstation als Sicherheitseinrichtung ausgebildet als Ersatz für ein Sicherheitsventil im Rohrleitungssystem höheren Drucks. Hierfür ist eine Druckentlastung über einen Bypass in das ND-System vorgesehen, welches in weiterer Ausgestaltung der Erfindung ein Sicherheitsventil aufweisen kann, vorzugsweise im Kesselaustritt.

Mit einer derartigen Schaltungsanordnung, wie zuvor beschrieben, wird erreicht, daß eine Umleitstation für das bzw. die Hochdrucksystem/e enffallen kann, daß ebenfalls Sicherheitsventile für das bzw. die Hochdrucksystem/e entfallen können, was sich in einem geringeren apparativen wie auch regelungstechnischen Aufwand auswirkt.

In vorteilhafter Weise kann vorgesehen sein, daß jeweils die Austrittsleitungen der Überhitzer für das bzw. die Hochdrucksystem/e und für das bzw. die Niederdrucksystem/e mittels der genannten Umleitstation miteinander verbindbar sind.

Gemäß einer weiteren vorteilhaften Ausgestaltung der Erfindung ist es günstig, für jedes Rohrleitungssystem im Abhitzekessel einen Economiser vorzusehen, wodurch zusätzlich die Abwärme des Turbinenabgases der Gasturbine genutzt werden kann.

Diese und weitere vorteilhafte Ausgestaltungen der Erfindung sind Gegenstand der Unteransprüche.

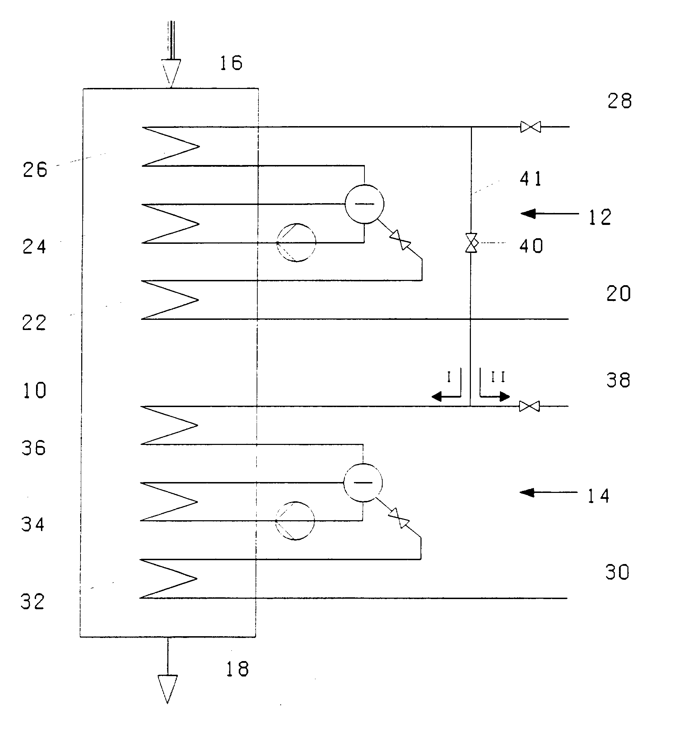

Anhand eines in der Zeichnung dargestellten Ausführungsbeispiels der Erfindung sollen die Erfindung, vorteilhafte Ausgestaltungen und besondere Vorteile der Erfindung näher erläutert und beschrieben werden.

Es zeigt die einzige Figur eine Schaltungsanordnung gemäß der Erfindung.

Die einzige Figur zeigt einen Abhitzekessel 10 eines nicht näher dargestellten Kombikraftwerkes, in welchem in zwei an sich voneinander getrennten Leitungssystemen 12, 14 Dampf erzeugt wird infolge der Abgabe der Abwärme des Abgases einer nicht näher gezeigten Gasturbine des Kombikraftwerkes, welches dem Abhitzekessel 10 am Eintritt 16 zuströmt und beim Austritt 18 den Abhitzekessel 10 verläßt, um einem Abgaskamin zuzuströmen.

Entsprechend der verfügbaren Abwärmemenge der Gasturbine ist der Abhitzekessel 10 so gestaltet, daß die beiden genannten Rohrleitungssysteme 12, 14 zur getrennten Dampferzeugung anschließbar sind. Dabei ist das dem Rauchgaseintritt 16 benachbarte System als Hochdrucksystem vorgesehen, während das in Strömungsrichtung des Rauchgases dahinter befindliche Rohrleitungssysteme 14 als Niederdruck-System ausgeführt ist.

Das HD-Rohrleitungssystem 12 besitzt eine HD-Speisewasserleitung 20, welche zu verdampfendes Wasser einem im Abhitzekessel 10 angeordneten Economiser 22 zuführt. Der Economiser 22 ist ausgangsseitig mit einem ebenfalls im Abhitzekessel angeordneten Verdampfer 24 verbunden, dessen Austrittsseite zu einem im Abhitzekessel 10 unmittelbar an einen in Nähe des Rauchgaszutritts 16 angeordneten Überhitzer 26 anschließt, dessen Austrittsleitung 28 zu einer hier nicht näher gezeigten Dampfturbine geführt ist.

In entsprechender Weise ist auch für den ND-Kreislauf 14 eine ND-Speisewasserleitung 30 vorgesehen, die zu einem Economiser 32 geführt ist, der ausgangsseitig mit einem Verdampferkreislauf 34 verbunden ist, dessen Austrittsseite zu einem Überhitzer 36 führt, dessen Austrittsleitung 38 zu einer ebenfalls nicht gezeigten Niederdruck-Dampfturbine führt.

Während bei herkömmlichen Anordnungen dieser Art im Anfahrbetrieb der aus dem Abhitzekessel 10 über die jeweilige Turbinenleitung 28, 38 abgeführter Dampf bis zum Erreichen der vorgegebenen Betriebparameter über eine Umleitstation an der jeweils zugeordneten Turbine bzw. Turbinenstufe umgeleitet und im hier ebenfalls nicht dargestellten Kondensator niedergeschlagen wird, ist entsprechend der vorliegenden Erfindung in der einzigen Figur gezeigten Schaltungsanordnung eine Verbindung zwischen den beiden als Turbinenleitungen bezeichneten Austrittsleitungen 28, 38 durch eine Umleitstation 40 mit Sicherheitsfunktion, d. h. mit Druckentlastung über einen Bypass in das ND-System, vorgesehen, welche neben der sicherheitsrelevanten Druckentlastung des HD-Systems entsprechend der vorliegenden Erfindung inbesondere dazu dient, im Anfahrbetrieb den im Hochdrucksystem 12 erzeugten Dampf, welcher noch nicht die vorgegebenen Betriebsparameter erreicht hat, dem Niederdrucksystem entsprechend den eingezeichneten Pfeilen I bzw. II zuzuführen, um auf diese Weise den Anfahrprozeß einerseits zu beschleunigen und andererseits so eine übermäßige Wärmebelastung der Umgebung zu vermeiden. Dabei strömt der heiße HD-Dampf aus der HD-Turbinenleitung 28 über die Umleitstation 40 entsprechend Pfeil I in den Überhitzerzweig des ND-Drucksystems und sorgt so für dessen Erwärmung. Wenn die Erwärmung des ND-Systems fortgeschriftten ist, folgt die Strömung des HD-Dampfes dem Pfeil II in Richtung ND-Turbine, die hier nicht gezeigt ist. Die Umleitstation ist druckgekühlt und schließt selbsttätig, sobald ein bestimmtes Druckniveau ND-seitig erreicht ist.

Ferner ist vorgesehen, daß in den Turbinenleitungen 28, 38 jeweils strömungsmäßig hinter dem Abgang der gemeinsamen Verbindungsleitung 41 Absperrarmaturen anzuordnen, welche auf diese Weise den Zugang zur zugeordneten Turbine bzw. Turbinenstufe unterbrechen können.

## Patentansprüche

1. Verfahren zum Anfahren eines Abhitzekessels (10) in einem Gasturbinen-Kombikraftwerk, mit zwei Drucksystemen (12, 14) unterschiedlichen Druckniveaus, die jeweils einen Überhitzerzweig aufweisen, wobei der erzeugte Dampf erst nach Erreichen vorgegebener Druck- und Temperaturparameter zum Betrieb einer Dampfturbine verwendet wird
mit folgenden Verfahrensschritten:
• während der Aufheizphase beim Anfahrbetrieb werden die Systeme (12, 14) mit höherem und niedrigererem Druck über eine Umleitstation (40) derart miteinander verbunden, daß der Dampf aus dem Überhitzer (26) des Drucksystems (12) höheren Drucks zunächst in den Überhitzerzweig des Drucksystems (14) niedrigeren Drucks strömt und bei fortgeschrittener Erwärmung des Drucksystems (14) niedrigeren Drucks zu einer Niederdruckturbine strömt;
• beim Erreichen eines vorgegebenen Druckniveaus im Drucksystem (14) niedrigeren Drucks wird die Umleitstation (40) geschlossen.

2. Verfahren nach Anspruch 1, dadurch gekennzeichnet, daß die Wärme des Dampfes aus dem Drucksystem (12) mit dem höherem Druck über Wärmetauscher dem Drucksystem (14) geringeren Drucks zugeführt wird.

3. Verfahren nach Anspruch 1, dadurch gekennzeichnet, daß die Wärme des Dampfes aus dem Drucksystem (12) mit höherem Druck dem Drucksystem (14) geringeren Drucks durch Einleitung in das System (14) zugeführt wird.

4. Anordnung zur Durchführung des Verfahrens nach einem der vorherigen Ansprüche mit einem Abhitzekessel (10) und mit wenigstens zwei Drucksystemen (12, 14) unterschiedlichen Drucks, denen jeweils wenigstens je ein in dem Abhitzekessel (10) befindlicher Verdampfer (24, 34) und Überhitzer (26, 36) zugeordnet sind, wobei jedes der beiden Drucksysteme eine separate Speisewasserleitung (20, 30) und eine separate Austrittsleitung (28, 38) aus dem Abhitzekessel (10) zu einer Dampfturbine aufweist, und mit einer Umleitstation (40) zur Verbindung der beiden Austrittsleitungen (28, 38), mittels der die beiden Drucksysteme (12, 14) derart verbindbar sind, daß der Dampf während der Aufheizphase beim Anfahrbetrieb des Abhitzekessels (10) aus dem Überhitzer (26) des Drucksystems (12) höheren Drucks zunächst in den Überhitzerzweig des Drucksystems (14) niedrigeren Drucks strömt und bei fortgeschrittener Erwärmung des Drucksystems (14) niedrigeren Drucks zu einer Niederdruckturbine strömt.

5. Anordnung nach Anspruch 4, dadurch gekennzeichnet, daß die Umleitstation (40) als Sicherheitseinrichtung ausgebildet ist, die für das System (12) höheren Drucks als Ersatz für ein Sicherheitsventil dient.

6. Anordnung nach Anspruch 4 oder 5, dadurch gekennzeichnet, daß jedes der Systeme (12, 14) einen Economiser (22, 32) aufweist, dessen Austritt in den zugeordneten Verdampferkreislauf (24, 34) einspeist.

## Claims

1. Method for starting a waste-heat boiler (10) in a gas turbine combined-cycle power station, having two pressure systems (12, 14) at different pressure levels, each having a superheater branch, the steam generated only being used for operating a steam turbine after reaching specified pressure and temperature parameters, having the following procedure steps:
• during the heating-up phase in the starting operation the higher and lower pressure systems (12, 14) are connected to one another via a by-pass station (40) in such a manner that the steam from the superheater (26) of the higher pressure system (12) initially flows into the superheater branch of the lower pressure system (14) and, as the lower pressure system (14) progressively heats up, flows to a low-pressure turbine;
• when a specified pressure level in the lower pressure system (14) is reached, the by-pass station (40) is closed.

2. Method according to Claiml, characterized in that the heat of the steam from the higher pressure system (12) is supplied via heat exchangers to the lower pressure system (14).

3. Method according to Claiml, characterized in that the heat of the steam from the higher pressure system (12) is supplied to the lower pressure system (14) by introducing it into the system (14).

4. Arrangement for carrying out the method according to one of the preceding claims, having a waste-heat boiler (10) and having at least two pressure systems (12, 14) of differing pressure to which in each case at least one evaporator (24, 34), located in the waste-heat boiler (10), and a superheater (26, 36) are assigned, each of the two pressure systems having a separate feedwater conduit (20, 30) and a separate outlet conduit (28, 38) from the waste-heat boiler (10) to a steam turbine, and having a by-pass station (40) for connecting the two outlet conduits (28, 38), by means of which by-pass station the two pressure systems (12, 14) can be connected in such a manner that, during the heating-up phase in the starting operation of the waste-heat boiler (10), the steam from the superheater (26) of the higher pressure system (12) initially flows into the superheater branch of the lower pressure system (14) and, as the lower pressure sytem (14) progressively heats up, flows to a low-pressure turbine.

5. Arrangement according to Claim 4, characterized in that the by-pass station (40) is configured as a safety device which serves as a substitute for a safety valve for the higher pressure system (12).

6. Arrangement according to Claim 4 or 5, characterized in that each of the systems (12, 14) has an economizer (22, 32) whose outlet feeds into the associated evaporator circuit (24, 34).

## Revendications

1. Procédé de démarrage d'une chaudière de récupération (10) dans une centrale combinée force-chaleur à turbine à gaz, avec deux circuits de pression (12, 14) avec des niveaux de pression différents qui présentent chacun une branche surchauffeur, la vapeur produite étant utilisée pour faire fonctionner une turbine à vapeur seulement lorsque des paramètres prédéterminés de pression et de température sont atteints, comportant les étapes suivantes:
• pendant la phase de montée en température, lors du démarrage, les circuits (12, 14) haute pression et basse pression sont connectés l'un à l'autre à l'aide d'un bloc de dérivation de telle sorte que la vapeur sortant du surchauffeur (26) du circuit (12) haute pression passe d'abord dans la branche surchauffeur du circuit (14) basse pression et, lorsque le circuit (14) se réchauffe s'écoule dans une turbine basse pression;
• lorsqu'un niveau de pression prédéterminé est atteint dans le circuit (14) basse pression, le bloc de dérivation (40) est fermé.

2. Procédé selon la revendication 1, caractérisé par le fait que la chaleur de la vapeur du circuit (12) haute pression est apportée au circuit (14) basse pression par l'intermédiaire d'échangeurs.

3. Procédé selon la revendication 1, caractérisé par le fait que la chaleur de la vapeur du circuit (12) haute pression est apportée au circuit (14) basse pression par injection dans le circuit (14).

4. Installation pour la mise en oeuvre du procédé selon l'une des revendications précédentes, avec une chaudière de récupération (10), avec au moins deux circuits de pression (12, 14) avec des niveaux de pression différents, à chacun desquels sont associés, dans la chaudière de récupération, respectivement un vaporiseur (24, 34) et un surchauffeur (26, 36), chaque circuit de pression comportant une conduite d'eau d'alimentation (20, 30) séparée et une conduite de sortie (28, 38) séparée menant de la chaudière de récupération (10) à une turbine à vapeur et avec un bloc de dérivation (40) pour connecter les deux conduites de sortie (28, 38), à l'aide duquel les deux circuits de pression (12, 14) peuvent être connectés l'un à l'autre de telle sorte que la vapeur provenant du surchauffeur (26) du circuit (12) haute pression, pendant la phase de montée en température lors du démarrage, circule tout d'abord dans la branche réchauffeur du circuit (14) basse pression et lorsque le circuit (14) se réchauffe s'écoule dans une turbine basse pression.

5. Installation selon la revendication 4, caractérisée par le fait que le bloc de dérivation (40) est agencé en dispositif de sécurité faisant office de moyen de remplacement d'une soupape de sécurité pour le circuit (12) haute pression.

6. Installation selon la revendication 4 ou 5, caractérisée par le fait que chaque circuit (12, 14) comporte un économiseur (22, 32) dont la sortie débouche dans le circuit de vaporiseur (24, 34) concerné.
